# EUROPEAN PATENT SPECIFICATION

(11) **EP 2 552 082 B1**
(45) Date of publication and mention of the grant of the patent: **31.10.2018**
(21) Application number: 11175995.7
(22) Date of filing: 29.07.2011
(51) Int. Cl.: H04L 29/08, H04L 29/12, G06F 17/30

(54) **Favourite web site acceleration method and system**
Verfahren zur Beschleunigung von Favoritenwebseiten und System
Procédé d'accélération de site Web favori et système

(43) Date of publication of application: 30.01.2013
(73) Proprietor: Deutsche Telekom AG, 53113 Bonn (DE)
(72) Inventor: Offermann, Philipp, 10717 Berlin (DE)
(74) Representative: Vossius & Partner Patentanwälte Rechtsanwälte mbB

(56) References cited:
- EP-A2- 0 868 063
- US-A1- 2002 143 984
- US-A1- 2003 225 885
- US-A1- 2004 068 579

## Description

### Technical Field

The present invention relates to an apparatus and a method for providing internet connectivity to users, in particular, to an apparatus and a method for providing accelerated access to favourite web site.

### Background of the invention

Many Internet users visit certain web site frequently, e.g. on a daily basis. Current examples are news sites, social networking sites and Internet portals. A component of the quality of experience when accessing these web sites is page loading speed. The loading speed mainly depends on the following components: i) DNS resolution time: For every domain where resources need to be fetched to load a web site, the domain name has to be resolved to an IP address; ii) Server response time: Depending on the setup and server load, the web server takes a certain amount of time to serve a requested resource; iii) Network latency and bandwidth: Depending on the distance between the web server and the client, the number of hops, router load and bandwidth, data packets take a certain amount of time to travel between the client computer and the web server and back; iv) Number of resources that need to be loaded: Depending on the HTML page to be loaded, further resources, e.g. images, CSS, JavaScript need to be loaded for the HTML page to be rendered. Each loading operation is subject to the components mentioned above; v) Browser rendering speed: Different browsers show a different behaviour when rendering web pages. E.g. currently, the web browser "Chrome 10" from Google shows a much faster rendering behaviour than the web browser "Internet Explorer 8" from Microsoft; vi) General computer speed: The slower the general speed of the computer, the longer it takes for a web browser to render a page; vii) Structure of HTML page: Depending on how an HTML page is structured, it can be rendered faster or slower. This depends on the internal structure and the number of further resources that are required by the HTML code.

A technology often employed to increase loading speed are caching web proxy servers. A caching web proxy is a web server that is positioned nearer to the user than the server hosting the content. For using the cache, all resources transferred from the content servers to the user have to be routed through the web proxy. The web cache stores all resources marked as cacheable in the HTTP header. Whenever a resource is requested that is present in the cache and fulfils the freshness criteria, the user request is not forwarded to the content server but served from cache. The advantage concerning quality of experience is twofold: Firstly, network latency is decreased as the web proxy is nearer to the user than the original content server. Possibly, even the bandwidth is increased. Secondly, the web proxy generally has a shorter server response time than the content server. Therefore, the quality of experience is increased when using caching web proxy servers.

To use a proxy server, the user needs to specify the server parameters, i.e. URL, port, protocol etc., in his system, e.g. the operating system or the web browser. Alternatively, the proxy server can be set up as a transparent proxy. In that case, all user traffic is automatically routed through the web proxy, the user does not need to set any client-side configuration.

The content in a proxy cache should be refreshed from time to time. To control the cache, three mechanisms are used: freshness, validation and invalidation. To verify the freshness, an expiration date and/or a maximum age can be included in the HTTP header. If a resource is expired, it needs to be validated. To validate a resource, the proxy server can send a request to the content server using the "If-Modified-Since" directive. In that case, the content server only returns the whole response if it has been modified since the specified date. Otherwise, only a short response confirming the resource's freshness is returned (304 Not Modified). Also, ETags can be used in conjunction with "If-None-Match" requests. In that case, the content server transmits a resource checksum in the ETag HTTP header. For validation, the web proxy sends an "If-None-Match" request including the checksum to the content server. The content server can then use the checksum to determine if the resource has been changed compared to the cached version of the web proxy. In case the resource has changed, the resource is transmitted to the web proxy. Otherwise, the proxy is informed that the resource has not changed, using a "304 Not Modified" message.

Whenever a user requests a resource that is not fresh, the loading speed is not significantly improved, as the resource validity has to be verified with the content server. The only advantage is the case that the resource is still fresh and the content server has to return only a small http packet confirming the freshness, e.g. "304 Not Modified".

US-A-2008-209120 describes a system and method to keep the resources in a web cache fresh. The method verifies independently of a specific user request if the resources in a web cache are still fresh. In case they are not fresh, the resources are validated. By using the system and method, it can be ensured that fresh resources are available in the cache whenever a user request arrives.

To keep a cached version of websites in a client's local home network, the "World Wide Web Offline Explorer" (WWWOFFLE), available at http://www.gedanken.demon.co.uk/wwwoffle/, can be used as a web proxy server. It offers various functions to enhance browsing. For this invention, two functions are of special interest. WWWOFFLE includes a web cache and allows the automatic recursive time-based pre-fetch of URLs. Thereby, the cached version of defined web sites can be refreshed automatically in defined intervals. The minimum interval is 1 hour; recursive fetch implies a significant communication volume with the content server.

The method described in patent application US-A-2008-209120 and WWWOFFLE require requesting a resource on a regular basis, even though the resource might not have been changed. This results in unnecessary communication.

The same problem is faced by web crawlers used by search engines and similar products. On his web site http://www.craighenderson.co.uk/siteupdatenotification/, Craig Henderson presents the architecture of a system that allows web servers to notify a central site update internet server about site updates. Other services like web crawlers can subscribe to the site update service and receive a note whenever a resource they subscribed performed changes. Thereby, other services do not have to check content for changes on a regular basis, but can react only when they are notified about an actual change.

CN-A-101860550 describes a method to accelerate streaming media by using a router to buffer resources.

US-A-2010-111059 describes a system and method to leverage overlapping WLAN networks of routers connected to the Internet and providing a content cache. The content is moved between the caches directed by a central management component, using the local WLAN connections.

WO-A-2010-081160 describes a bundle of techniques to optimize web surfing behaviour. It describes a method to make content prefetchable even though the content provider uses techniques to prevent caching, to allow user behaviour tracking by content providers even though a resource is served from cache, to optimise pre-fetching performance, and to integrate DNS proxy functions with HTTP proxy functions to increase the DNS lookup speed. US-A-2009-100228 describes a method to combine pre-fetching with web caching. The cache serves a pre-fetching request from cache only if the resource is fresh. Otherwise the cache verifies if the cached resource is still fresh. This method seems trivial, as this is the automatic behaviour when combining pre-fetching with a regular caching proxy server. WO-A-2008-101213 describes systems and methods to serve cached content even though it is not sure if the content is fresh, while verifying the freshness in the background. US-B-7783757 describes systems and methods to revalidate a cached resource while serving the cache resource to the client.

The publications US2003225885, EP0868063 and US2004068579 disclose various methods of caching URLs and Web pages in servers on the Internet, wherein the caching is optimized by favouring popular Web-sites.

### Summary of the invention

An object of the present invention is to provide an apparatus, a system and a method to accelerate the access to certain web sites, in particular, to reduce the time between an initial web site request and the rendering of the website in the user's web browser for specified web sites, especially web sites that change frequently and/or contain user-specific content.

These objects can be obtained by subject-matter defined in independent claims. Further preferred embodiments are described in dependent claims.

The present invention provides an apparatus for providing internet connectivity to at least one client, wherein the apparatus comprises a modem for connecting the client with the Internet; a storage being configured to store at least one list of unified resource locations corresponding to a plurality of web pages; and a web cache comprises a cache of the plurality of web pages, wherein the web cache is adapted to automatically carry out an update of the cache when a time limit is reached. The web cache may be also called as web proxy or caching web proxy.

According to another aspect, the present invention provides a method for providing internet connectivity to at least one client, wherein the method comprising the steps of: a) connecting the client with the Internet by an apparatus, wherein the apparatus comprises a modem, a web cache and a storage; b) creating at least one list of unified resource locations corresponding to the plurality of web pages; and c) caching a plurality of web pages and automatically updating of the cache when a time limit is reached.

Preferably, the apparatus comprises an interface for receiving the list of unified resource locations, which is defined manually.

Preferably, the apparatus comprises means for automatically determining and/or updating the list of unified resource locations on the basis of access behaviour of the client.

Preferably, the apparatus comprises a routing unit for redirecting the internet connectivity to a plurality of clients.

Preferably, a plurality of list of unified resource locations are stored on the storage, each list corresponds to one of the plurality of clients.

Preferably, the web cache of the apparatus is connected to an external web cache which acts as parent web cache for the web cache of the apparatus.

Preferably, the web cache is configured to store a plurality of content information, each content information including a cookie related to a respective one of the plurality of web pages and a unique identifier of the client requesting the respective one of the plurality of web pages. Preferably, the time limit is defined to be 0.5 to 10 minutes, preferably 0.8 to 5 minutes, more preferably 1 to 2 minutes, and/or defined in a HTTP header of the plurality of web pages.

Alternatively, the time limit is reached when a site update notification unit sends a signal to the web cache notifying that an update of at least one of the plurality web pages exists.

Alternatively, the time limit is reached when the external web cache sends a signal to the web cache notifying that an update of at least one of the plurality web pages exists; wherein the external web cache is connected with the web cache and subscribed to a site update notification unit.

According to another aspect, the present invention also provides a system for providing internet connectivity to at least one client, wherein the system comprises the apparatus as above defined, and a central web cache connected to the web cache of the apparatus and being adapted to act as parent web cache for the web cache of the apparatus.

The apparatus, the system and the method according to the present invention increases the loading speed of predefined websites for users in a home network. The apparatus comprises a modem that is capable to connect a number of client systems to the Internet. The apparatus may further comprise a router for redirecting the Internet connection to the number of clients. Certain URLs are configured for acceleration, i.e. accelerated URLs. Alternatively or additionally, the accelerated URLs can be identified automatically based on the user behaviour, i.e. the URLs that are most frequently accessed. For these URLs, a fresh version of all required resources is kept in a web cache on the apparatus, i.e. a local web cache. Optionally, a recursion level can be set. In that case, a fresh version of the accelerated URLs and all linked pages are kept in the local web cache down to the depth specified by the recursion level. To keep fresh versions of resources that are user specific, cookies can be stored on the apparatus to be included in the HTTP requests used to keep the cached resources fresh. To reduce load on the content servers, the apparatus, in particular the web cache, preferably directs HTTP requests related to the acceleration to a central caching web proxy server. The verification of the freshness of the resource on the local web cache may be either triggered by the expiration of a resource according to the HTTP header, based on a time interval or based on an update notification from a site update notification system. Alternatively, the site update notification system can inform the central caching web proxy about a resource update.

The present invention keeps the web cache fresh, independently of any requests sent by the client, i.e. the cache may be updated before the client accesses the certain web site

The advantage of the apparatus, the system and method for the user is that the accelerated pages are loaded much faster than non-accelerated pages. This is due to the connection to the router/modem being faster and having lower latency. At the same time, the system and method minimises additional communication and server load induced by the system by leveraging a central caching web proxy and optionally a site update notification system.

This present invention contributes a system and method to reduce the time between an initial web site request and the rendering of the website in the user's web browser for specified web sites, especially web sites that change frequently and/or contain user-specific content.

### Brief description of figures

The present invention will now be explained with reference to preferred embodiments and the drawings, in which:
Fig. 1 shows a process of the resource update according to a preferred embodiment of the present invention;
Fig. 2 shows a schematic view of the components of the system according to a preferred embodiment the present invention;
Fig. 3 shows a diagram of a site update notification system;
Fig. 4 shows a schematic view of the system as shown in Fig. 2 further comprising a site update notification system communicating with the central caching web proxy; and
Fig. 5 shows a schematic view of the system as shown in Fig. 2 further comprising a site update notification system communication with the favourite sites accelerators.

### Detailed description of the invention

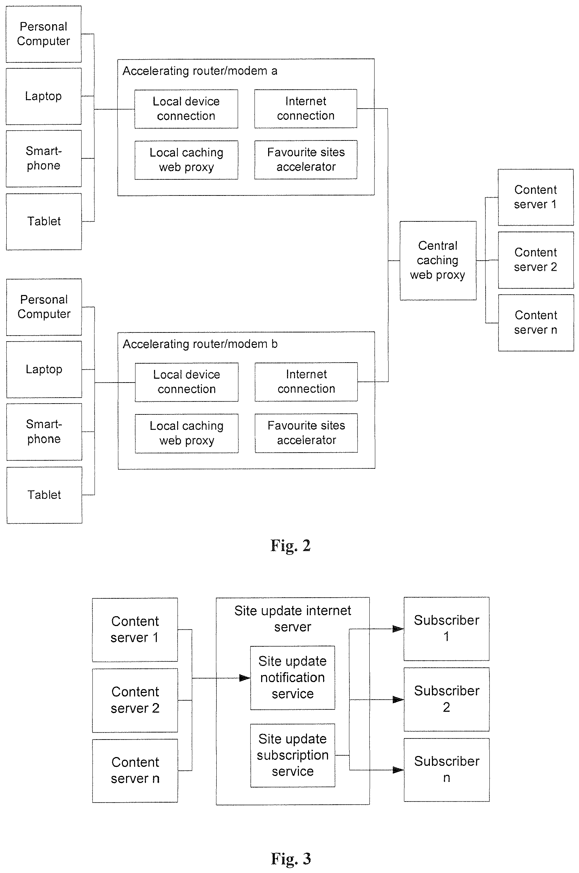

Fig. 2 shows that the system comprises an apparatus including a modem. The end user uses the modem to connect his devices, e.g. PC, laptop, Smartphone, Tablet, to the Internet. The modem may be for example a DSL router/modem or cable router/modem. The system may further comprise a central caching web proxy server acting as parent web cache. In particular, the apparatus comprises a subsystem to establish a connection to the internet, e.g. over DSL or cable; a subsystem to connect local devices to the router, e.g. PC, Laptop, Smartphone, Tablet PC via LAN, WLAN, USB; a caching web proxy with attached storage, e.g. RAM, hard disk, flash drive; and a favourite sites accelerator, i.e. a subsystem to execute a computer-readable implementation of the method described below.

### Exemplary system implementation

The router/modem is connected to the Internet using state-of-the-art techniques; the local devices are connected to the router/modem using state-of-the-art techniques. In case the caching web proxy on the apparatus is configured as a regular web proxy, the operating systems or web browsers of the local devices are configured to use the apparatus as a web proxy server. If the caching web proxy is configured as a transparent proxy, this step is not necessary. The caching web proxy on the apparatus is configured to use the central caching web proxy as parent proxy. Optionally, the parent proxy can be used only for HTTP requests concerning hosts of accelerated URLs, see below.

The caching web proxy on the apparatus is configured as a private cache. In addition to caching content without cookie, also resources that are requested using cookies can be cached. To achieve this, for HTTP GET requests that contain a "Cookie" header, the "Cookie" header is stored in addition to the HTTP response. The HTTP response is cached even if it contains a "Set-Cookie" header and/or is marked as non-cacheable, e.g. according to the "Cache-Control" header, the "Expires" header or the "Pragma" header. The cached resources are delivered if a HTTP request using the same "Cookie" header is received. Further rules concerning cached content may also apply here.

### Site Set-up for Acceleration

The accelerating apparatus is configured by specifying URLs for acceleration, e.g. on the apparatus configuration portal. Optionally, a recursion level, i.e. depth, can be specified to indicate the number of levels of linked pages starting from the specified URL to keep fresh in the local cache. In case cookies are needed to successfully retrieve content from the URL, the requirement can optionally be indicated for each URL. In that case, the cookies have to be stored on the accelerating apparatus so that they can be used to retrieve fresh content for personalised pages from a content server.

Alternatively, the caching web proxy on the apparatus can analyse the URL access pattern as observed from the users' requests. A defined number of most frequently accessed URLs can automatically be configured for acceleration, without any user interaction. Concerning web sites that require cookies, this method only works for automatic cookie storage, see below.

### Cookie specification and storage

There are two methods to retrieve and store the required cookies. For the host of a configured URL, the caching web proxy can store the cookies it sees in the user's HTTP requests for future usage. Newer cookies overwrite older cookies. The advantage is that even when a cookie expires and is replaced by a new version, the favourite sites accelerator can retrieve the new version without user interaction and continue to work. Using this method the site can be kept fresh for one user, i.e. the user which accessed the site most recently. In case there are different users using the same router/modem, this might be inconvenient and a privacy concern. Therefore, the below described method can be used.

Alternatively, when setting up a site for acceleration, the cookie can be captured during a certain time interval. The interval starts when indicating that the cookies should be stored. It can end either based on a timeout, or based on a user input. During the time interval, the cookies for the relevant host will be captured as described above. The caching web proxy stores the cookies it sees for the host, newer cookies overwriting older cookies.

Optionally, the cookies can be stored together with a unique identifier of the client the cookies have been sent from, preferably MAC address or IP address. Both methods described above can be used in conjunction with this technique. When using client identification, accelerated URLs requiring cookies are specified per client. The cached resources retrieved for these accelerated URLs are stored in a separate cache for each client. Whenever a client requests such a cached resource, it is served from the client's cache.

### Keeping sites fresh

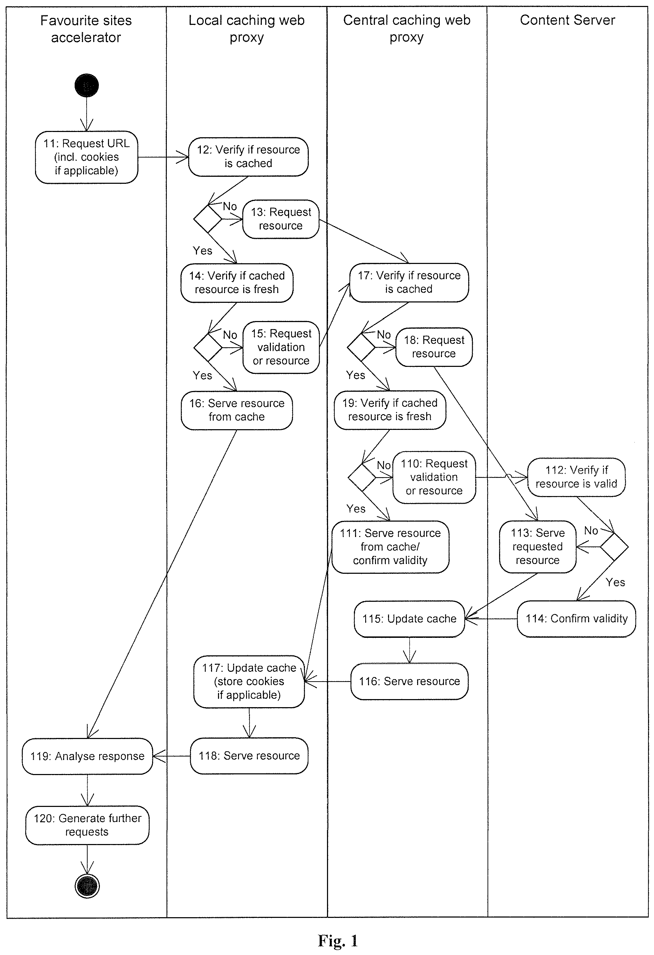

The present invention concerns different techniques to keep content fresh as follows:
i) In case a cached version of the HTTP response to an HTTP GET request of an accelerated URL does not exist, the URL and all further resources necessary to display the web site are fetched via the local caching web proxy on the apparatus, see Fig. 1. If a recursion level is set for an accelerated URL, links are followed down to the level specified.
ii) In case a "Cache-Control: max-age" or "Expires" HTTP header exists in a cached HTTP response to an HTTP GET request for an accelerated URL, stored by the local caching web proxy, these header fields are used by the favourite sites accelerator on a regular basis to determine if the content has to be refreshed. If a resource is expired, the resource is refreshed according to the method described in figure 1. If no header exists to determine the freshness, e.g. because no information was included in the HTTP response or because the HTTP response was requested using a "Cookie" header or includes a "Set-Cookie" header, a refresh is scheduled based on a pre-defined interval since the last refresh. Optionally, refreshing based on a time interval can also be used for resources that have a freshness header. This technique can be useful to reduce communication for resources that have a very short freshness lifetime. In case a refresh is necessary, resources are refreshed as described under point i. Thereby, only further resources that are not fresh anymore are validated and possibly reloaded.
iii) Additionally, the method described in patent application US-A-2008-209120 may be also used to keep the cached resources fresh. For this system and method, only resources of the same host as the configured URLs are refreshed. Also, in addition to the method described in US-A-2008-209120, refreshing of a resource stored in cache can be ceased after a specific amount of time since the last access.

Fig. 1 shows the process of updating cache of an URL. The process may be started under the following conditions:
a) On a regular basis, e.g. every minute or every 5 minutes, the cached versions of the accelerated URLs are verified if they are still fresh. If they are not present or not fresh, the process is started with the respective URL.
b) Alternatively to a), the process is started for the accelerated URLs according to a pre-defined time interval. The time interval can change depending on parameters like time of day, weekday or month. When using a time interval, optionally the freshness verification of step 14 can be omitted. Thereby, it is possible to serve stale content to the client, reducing communication overhead.
c) The process is recursively started by step 120 "generate further requests".
A more detailed description of the process about each steps illustrated in Fig. 1 is provided in the table below:

| **Step** | **Description** |
|---|---|
| 11 | The favourite sites accelerator issues an HTTP GET request for an URL, including relevant cookies if applicable. The cookies are taken from the cookie store. |
| 12 | The caching web proxy on the local device verifies if the requested resource is available in the local cache. If cookies are included in the request, it is also compared if the cookies match the cookies stored in the cache conjunction with the requested resource. |
| 13 | If the requested resource is not present in the local cache, a HTTP GET for the URL is issued to the central caching web proxy or to the content server. |
| 14 | If the requested resource is present in the local cache, it is verified if the cached resource is still fresh. Optionally, this step can be omitted to allow serving stale content. |
| 15 | If the requested resource in the local cache is not fresh, a validation request is issued to the central caching web proxy. The request can be answered either by confirming the resource's freshness or by transmitting the current version of the resource. |
| 16 | If the requested resource in the local cache is fresh, it is delivered to the favourite sites accelerator. |
| 17 | When a HTTP GET request is received by the central caching web proxy, the proxy verifies if a cached version of the requested resource is available. |
| 18 | If the requested resource is not present in the central cache, a HTTP GET for the URL is issued to the content server. |
| 19 | If the requested resource is present in the central cache, it is verified if the cached resource is still fresh, using state-of-the-art verification techniques. |
| 110 | If the requested resource in the central cache is not fresh, a validation request is issued to the content server. The request can be answered either by confirming the resource's freshness or by transmitting the current version of the resource. |
| 111 | If the requested resource in the central cache is fresh, it is either delivered to the local caching web proxy, or in case a validation was requested and the resource is valid, the validity of the resource is confirmed. |
| 112 | The content server verifies if the resource in the cache of the central caching web proxy is valid, using state-of-the-art techniques. |
| 113 | If the resource is not valid, or a resource has been requested directly via step 18, the resource is delivered to the central caching web proxy. |
| 114 | In case the validity of the resource in the cache of the central caching web proxy can be confirmed, a confirmation is send to the central caching web proxy. |
| 115 | The cache of the central caching web proxy is updated with the information delivered from the content server. |
| 116 | The central caching web proxy delivers the up-to-date resource to the local caching web proxy. |
| 117 | The cache of the local caching web proxy is updated with the information delivered from the central caching web proxy. If cookies have been used to retrieve the data, the cookies are stored in conjunction with the resource. |
| 118 | The local caching web proxy delivers the up-to-date resource to the favourite sites accelerator. |
| 119 | The favourite sites accelerator analyses the resource to identify the URLs of referenced resources that are necessary to display a web page and URLs referenced in links. |
| 120 | Requests for further resources necessary to display a web page are issued recursively. This involves referenced files e.g. containing JavaScript (JS), Cascading Style Sheets (CSS), Hypertext Markup Language (HTML), Flash or Java. Additionally, if a recursive update has been configured, linked URLs are recursively fetched if the specified depth has not yet been reached. |

It is to be noted that the above described process is a preferred embodiment, e.g. the element such as central caching web proxy is not mandatory to carry out the present invention, or the check of the freshness of the cache is also optionally, since the cache according to the present invention is at the most time fresh.

### Handling cookies

When storing resources that have been requested using cookies in the local web cache, the cookies that have been used for the request are stored in conjunction with the reply. Whenever a client request for a resource that has been stored in the cache in conjunction with cookies is received, the cookies included in the request are compared with the cookies stored in the cache. Only if the cookies match, the resource from the cache is returned. Otherwise, the request is not served from the cache, but forwarded to the central caching web proxy. Thereby, privacy can be ensured for cached resources, even if there are several clients accessing the Internet over the same apparatus according to the present invention.

### Handling client requests

The client requests for resources present in the local caching web proxy are handled in the regular way. Optionally, the freshness verification of the cached resources can be omitted to allow serving stale content.

### Integration with a site update notification system

In case the regular updates cause unwanted traffic and load on the content servers, the system can be integrated with a site update notification system. An example of a site update notification system is shown in Fig. 3. Two types of implementation are possible.

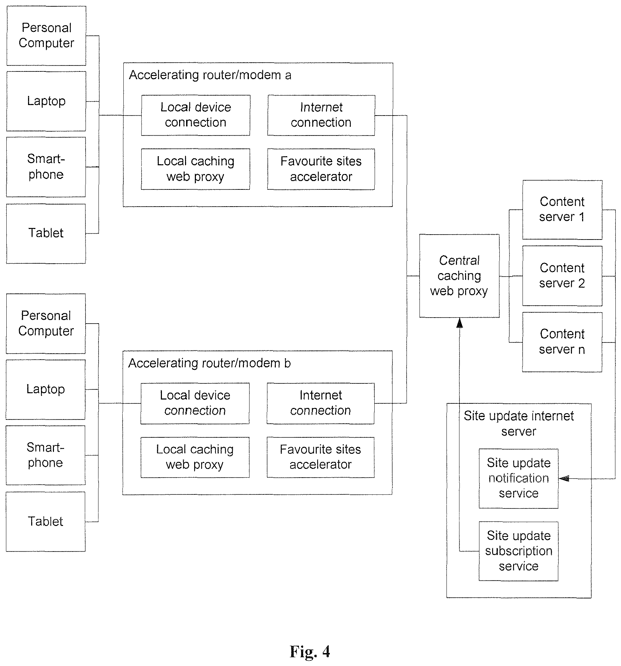

Fig. 4 shows that the central caching web proxy can subscribe to the notification system. Whenever the central caching web proxy receives an update notification for a resource that is present in the cache, the cached resource is updated. Therefore, the resource can always be considered as being fresh, HTTP header freshness specifications can be ignored if present. All client requests for the resource are served from the cache. The advantage of this setup is that validation requests from the central caching web proxy to the content server become unnecessary, the communication overhead and server load is reduced.

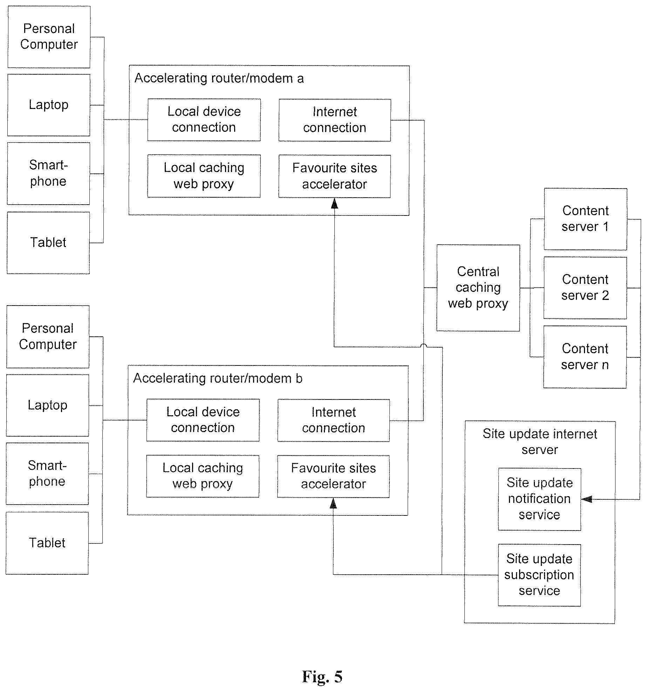

Fig. 5 shows that the favourite sites accelerator can subscribe to the site update subscription service for the accelerated URLs. In that case, the method outlined in figure 1 is triggered whenever an update notification is received. The advantage of this setup is that validation requests from the local caching web proxies to the central caching web proxy are minimised, reducing communication overhead and server load.

The present invention provides several preferred advantages over the prior art which are summarised in the table below:

| *Prior art* | *Present invention* |
|---|---|
| Web pages are to be fetched from content server or a web proxy server, communication being subject to bandwidth restrictions and latency introduced by the access and aggregation network. | Fresh copies of selected web pages are kept in a cache on the router/modem. Client access to these resources is not subject to bandwidth restrictions and latency from the Internet connection. |
| Pre-fetching and keeping a cache fresh imposes significant communication overhead and server load, often resulting in content providers blocking such requests. | According to a preferred embodiment, only the cache of the central web proxy server are to be kept fresh with resources from the content servers. The distributed end user apparatus including routers/modems only communicate with the central cache and not directly with the content servers. Leveraging a site update notification system further reduces communication overhead and server load. |
| Pages to keep a fresh version in cache are configured manually. | Analysing browsing behaviour enables automatic identification and configuration of cached resources to be kept fresh. |

The present invention has now been described with reference to several embodiments thereof. The foregoing detailed description and examples have been given for clarity of understanding only. No unnecessary limitations are to be understood there from. It will be apparent to those skilled in the art that many changes can be made in the embodiments described without departing from scope of the present invention. In particular, although features and elements of the present invention are described in the preferred embodiments in particular combinations, each feature or element can be used alone without the other features and elements of the preferred embodiments or in various combinations with or without other features and elements of the invention. Therefore, the scope of the present invention should not be limited to the methods and systems described herein, but only by the language of the claims and the equivalents of those methods and systems.

## Claims

1. Apparatus for providing internet connectivity to a plurality of clients, comprising:
a modem for connecting the client with the Internet;
a routing unit for redirecting the internet connectivity to a plurality of clients; **characterised in that** the apparatus further comprises:
a storage being configured to store a plurality of lists of unified resource locations, wherein each of the lists corresponds to a plurality of web pages and each of the lists corresponds to one of the plurality of clients; and
a local web cache comprising a cache of the plurality of web pages, wherein the web cache is adapted to automatically carry out an update of the cache when a time limit is reached.

2. Apparatus according to claim 1, comprising an interface for receiving the list of unified resource locations, which is defined manually or comprising means for automatically determining and/or updating the list of unified resource locations on the basis of access behaviour of the client.

3. Apparatus according to any one of the preceding claims, wherein the apparatus is connectable to an external web cache.

4. Apparatus according to any one of the preceding claims, wherein the local web cache is configured to store a plurality of content information, each content information including a cookie related to a respective one of the plurality of web pages and a unique identifier of the client requesting the respective one of the plurality of web pages.

5. Apparatus according to any one of the claims 1 to 4, wherein the time limit is between 0.5 and 10 minutes, preferably between 0.8 and 5 minutes, more preferably between 1 and 2 minutes; and/or wherein the time limit is defined in a HTTP header of the plurality of web pages.

6. Apparatus according to any one of the claims 1 to 4, wherein the time limit is reached when a site update notification unit sends a signal to the local web cache notifying that an update of at least one of the plurality web pages exists or wherein the time limit is reached when the external web cache sends a signal to the local web cache notifying that an update of at least one of the plurality web pages exists; wherein the external web cache is connected with the local web cache and subscribed to a site update notification unit.

7. System for providing internet connectivity to at least one client, comprising an apparatus according to any one of claims 1 - 6, and a central web cache connected to the local web cache of the apparatus and being adapted to act as parent web cache for the local web cache of the apparatus.

8. Method for providing Internet connectivity to a plurality of clients, wherein the method comprises the steps of:
a) connecting the plurality of clients with the Internet by an apparatus, wherein the apparatus comprises a modem, a local web cache and a storage;
b) redirecting the internet connectivity to the plurality of clients by a routing unit of the apparatus;
c) creating a plurality of lists of unified resource locations, wherein each of the lists corresponds to a plurality of web pages and each of the lists corresponds to one of the plurality of clients;
d) caching a plurality of web pages in the apparatus and automatically updating of the cache when a corresponds to one of the plurality of clients;
d) caching a plurality of web pages and automatically updating of the cache when a time limit is reached.

9. Method according to claim 8, further comprising the step of: manually defining the lists of unified resource locations or
further comprising the step of: automatically determining and/or updating the lists of unified resource locations on the basis of access behaviour of the client.

10. Method according to claim 8 or 9, further comprising the step of: connecting the local web cache of the apparatus to an external web cache.

11. Method according to any one of claims 8 to 10, further comprising the step of: configuring the local web cache to store a plurality of content information, each content information including a cookie related to a respective one of the plurality of web pages and a unique identifier of the client requesting the respective one of the plurality of web pages.

12. Method according to any one of claims 8 to 11,
wherein the time limit is between 0.5 and 10 minutes, preferably between 0.8 and 5 minutes, more preferably between 1 and 2 minutes; and/or
wherein the time limit is defined in a HTTP header of the plurality of web pages.

13. Method according to any one of claims 8 to 11,
wherein the time limit is reached when a site update notification unit sends a signal to the local web cache notifying that an update of at least one of the plurality web pages exists; or
wherein the time limit is reached when the external web cache sends a signal to the local web cache notifying that an update of at least one of the plurality web pages exists;
wherein the external web cache is connected with the local web cache and subscribed to a site update notification unit.

## Patentansprüche

1. Vorrichtung zum Bereitstellen einer Internetkonnektivität mit einer Vielzahl von Clients, mit:
einem Modem zum Verbinden des Client mit dem Internet;
einer Verkehrslenkungseinheit zum Umleiten der Internetkonnektivität zu einer Vielzahl von Clients:
**dadurch gekennzeichnet, dass** die Vorrichtung ferner aufweist:
e inen Speicher, der konfiguriert ist, eine Vielzahl von Listen von vereinheitlichten Ressourcenorten zu speichern, wobei jede der Listen einer Vielzahl von Webseiten entspricht und jede der Listen einem der Vielzahl der Clients entspricht; und
e inen lokalen Webzwischenspeicher, der einen Zwischenspeicher der Vielzahl der Webseiten aufweist, wobei der Webzwischenspeicher eingerichtet ist, automatisch eine Aktualisierung des Zwischenspeichers auszuführen, wenn eine Zeitbegrenzung erreicht ist.

2. Vorrichtung nach Anspruch 1, die eine Schnittstelle zum Empfangen der Liste der vereinheitlichten Ressourcenorte aufweist, die manuell definiert wird, oder
Mittel zum automatischen Bestimmen und/oder Aktualisieren der Liste der vereinheitlichten Ressourcenorte auf der Grundlage des Zugriffsverhaltens des Client aufweist.

3. Vorrichtung nach einem der vorhergehenden Ansprüche, wobei die Vorrichtung mit einem externen Webzwischenspeicher verbindbar ist.

4. Vorrichtung nach einem der vorhergehenden Ansprüche, wobei der lokale Webzwischenspeicher konfiguriert ist, eine Vielzahl von Inhaltsinformationen zu speichern, wobei jede Inhaltsinformation einen Cookie, der eine jeweilige der Vielzahl der Webseiten betrifft, und eine eindeutige Kennung des Client aufweist, der die jeweilige der Vielzahl der Webseiten anfordert.

5. Vorrichtung nach einem der Ansprüche 1 bis 4, wobei die Zeitbegrenzung zwischen 0,5 und 10 Minuten, vorzugsweise zwischen 0,8 und 5 Minuten, besonders bevorzugt zwischen 1 und 2 Minuten liegt; und/oder
wobei die Zeitbegrenzung in einem HTTP-Header der Vielzahl der Webseiten definiert ist.

6. Vorrichtung nach einem der Ansprüche 1 bis 4, wobei die Zeitbegrenzung erreicht ist, wenn eine Siteaktualisierungsmeldeeinheit ein Signal an den lokalen Webzwischenspeicher sendet, das meldet, dass eine Aktualisierung von mindestens einer der Vielzahl Webseiten vorhanden ist, oder
wobei die Zeitbegrenzung erreicht ist, wenn der externe Webzwischenspeicher ein Signal an den lokalen Webzwischenspeicher sendet, das meldet, dass eine Aktualisierung von mindestens einer der Vielzahl Webseiten vorhanden ist;
wobei der externe Webzwischenspeicher mit dem lokalen Webzwischenspeicher verbunden ist und eine Siteaktualisierungsmeldeeinheit abonniert hat.

7. System zum Bereitstellen einer Internetkonnektivität für mindestens einen Client, das eine Vorrichtung nach einem der Ansprüche 1 bis 6 und einen zentralen Webzwischenspeicher aufweist, der mit dem lokalen Webzwischenspeicher der Vorrichtung verbunden ist und eingerichtet ist, als ein Ursprungs-Webzwischenspeicher für den lokalen Webzwischenspeicher der Vorrichtung zu dienen.

8. Verfahren zum Bereitstellen einer Internetkonnektivität mit einer Vielzahl von Clients, wobei das Verfahren die Schritte aufweist:
a) Verbinden der Vielzahl der Clients mit dem Internet durch eine Vorrichtung, wobei die Vorrichtung ein Modem, einen lokalen Webzwischenspeicher und einen Speicher aufweist;
b) Umleiten der Internetkonnektivität zur Vielzahl der Clients durch eine Verkehrslenkungseinheit der Vorrichtung;
c) Erzeugen einer Vielzahl von Listen von vereinheitlichten Ressourcenorten, wobei jede der Listen einer Vielzahl von Webseiten entspricht und jede der Listen einem der Vielzahl der Clients entspricht;
d) Zwischenspeichern einer Vielzahl von Webseiten in der Vorrichtung und automatisches Aktualisieren des Zwischenspeichers, wenn eine Zeitbegrenzung erreicht wird.

9. Verfahren nach Anspruch 8, das ferner den Schritt aufweist: manuelles Definieren der Listen der vereinheitlichten Ressourcenorte, oder
das ferner den Schritt aufweist: automatisches Bestimmen und/oder Aktualisieren der Listen der vereinheitlichten Ressourcenorte auf der Grundlage des Zugriffsverhaltens des Client.

10. Verfahren nach Anspruchs 8 oder 9, das ferner den Schritt aufweist: Verbinden des lokalen Webzwischenspeichers der Vorrichtung mit einem externen Webzwischenspeicher.

11. Verfahren nach einem der Ansprüche 8 bis 10, das ferner den Schritt aufweist: Konfigurieren des lokalen Webzwischenspeichers, um eine Vielzahl von Inhaltsinformationen zu speichern, wobei jede der Inhaltsinformationen einen Cookie, der eine jeweilige der Vielzahl der Webseiten betrifft, und eine eindeutige Kennung des Client aufweist, der die jeweilige der Vielzahl der Webseiten anfordert.

12. Verfahren nach einem der Ansprüche 8 bis 11,
wobei die Zeitbegrenzung zwischen 0,5 und 10 Minuten, vorzugsweise zwischen 0,8 und 5 Minuten, besonders bevorzugt zwischen 1 und 2 Minuten liegt; und/oder wobei die Zeitbegrenzung in einem HTTP-Header der Vielzahl der Webseiten definiert ist.

13. Verfahren nach einem der Ansprüche 8 bis 11,
wobei die Zeitbegrenzung erreicht ist, wenn eine Siteaktualisierungsmeldeeinheit ein Signal an den lokalen Webzwischenspeicher sendet, das meldet, dass eine Aktualisierung von mindestens einer der Vielzahl Webseiten vorhanden ist; oder
wobei die Zeitbegrenzung erreicht ist, wenn der externe Webzwischenspeicher ein Signal an den lokalen Webzwischenspeicher sendet, das meldet, dass eine Aktualisierung von mindestens einer der Vielzahl Webseiten vorhanden ist;
wobei der externe Webzwischenspeicher mit dem lokalen Webzwischenspeicher verbunden ist und eine Siteaktualisierungsmeldeeinheit abonniert hat.

## Revendications

1. Dispositif destiné à assurer une connectivité à Internet à une pluralité de clients, comprenant :
un modem pour connecter le client à Internet ;
une unité de routage pour rediriger la connectivité à Internet vers une pluralité de clients ; **caractérisé en ce que** ledit dispositif comprend en outre :
un stockage prévu pour stocker une pluralité de listes de localisations de ressources unifiées, chacune des listes correspondant à une pluralité de pages web et chacune des listes correspondant à un client de la pluralité de clients ; et
un cache web local comprenant un cache de la pluralité de pages web, ledit cache web étant adapté pour exécuter automatiquement une mise à jour du cache quand une limite temporelle est atteinte.

2. Dispositif selon la revendication 1, comprenant une interface pour recevoir la liste de localisations de ressources unifiées, laquelle est définie manuellement, ou
comprenant un moyen pour déterminer automatiquement et/ou mettre à jour la liste de localisations de ressources unifiées sur la base d'un comportement d'accès du client.

3. Dispositif selon l'une des revendications précédentes, où ledit dispositif est connectable à un cache web externe.

4. Dispositif selon l'une des revendications précédentes, où le cache web local est prévu pour stocker une pluralité d'informations de contenu, chaque information de contenu comprenant un cookie relatif à une page respective de la pluralité de pages web et un identifiant unique du client appelant la page respective de la pluralité de pages web.

5. Dispositif selon l'une des revendications 1 à 4, où la limite temporelle est comprise entre 0,5 et 10 minutes, avantageusement entre 0,8 et 5 minutes, préférentiellement entre 1 et 2 minutes ; et/ou
où la limite temporelle est définie dans un en-tête HTTP de la pluralité de pages web.

6. Dispositif selon l'une des revendications 1 à 4, où la limite temporelle est atteinte quand une unité de notification de mise à jour de site adresse un signal au cache web local, notifiant qu'une mise à jour d'au moins une page de la pluralité de pages web est existante, ou
où la limite temporelle est atteinte quand le cache web externe adresse un signal au cache web local, notifiant qu'une mise à jour d'au moins une page de la pluralité de pages web est existante ;
le cache web externe étant connecté au cache web local et abonné à une unité de notification de mise à jour de site.

7. Système destiné à assurer une connectivité à Internet à au moins un client, comprenant un dispositif selon l'une des revendications 1 à 6, et un cache web central connecté au cache web local du dispositif et adapté pour fonctionner comme cache web parent pour le cache web local du dispositif.

8. Procédé destiné à assurer une connectivité à Internet à une pluralité de clients, ledit procédé comprenant les étapes suivantes :
a) connexion à Internet de la pluralité de clients par un dispositif, ledit dispositif comprenant un modem, un cache web local et un stockage ;
b) redirection de la connectivité à Internet vers la pluralité de clients par une unité de routage du dispositif ;
c) création d'une pluralité de listes de localisations de ressources unifiées, chacune des listes correspondant à une pluralité de pages web et chacune des listes correspondant à un client de la pluralité de clients ;
d) mise en cache d'une pluralité de pages web dans le dispositif et mise à jour automatique du cache quand une limite temporelle est atteinte.

9. Procédé selon la revendication 8, comprenant en outre l'étape de : définition manuelle de la liste de localisations de ressources unifiées, ou comprenant en outre l'étape de :
détermination automatique et/ou mise à jour de la liste de localisations de ressources unifiées sur la base du comportement d'accès du client.

10. Procédé selon la revendication 8 ou la revendication 9, comprenant en outre l'étape de :
connexion du cache web local du dispositif à un cache web externe.

11. Procédé selon l'une des revendications 8 à 10, comprenant en outre l'étape de : configuration du cache web local pour stocker une pluralité d'informations de contenu, chaque information de contenu comprenant un cookie relatif à une page respective de la pluralité de pages web et un identifiant unique du client appelant la page respective de la pluralité de pages web.

12. Procédé selon l'une des revendications 8 à 11,
où la limite temporelle est comprise entre 0,5 et 10 minutes, avantageusement entre 0,8 et 5 minutes, préférentiellement entre 1 et 2 minutes et/ou
où la limite temporelle est définie dans un en-tête HTTP de la pluralité de pages web.

13. Procédé selon l'une des revendications 8 à 11,
où la limite temporelle est atteinte quand une unité de notification de mise à jour de site adresse un signal au cache web local, notifiant qu'une mise à jour d'au moins une page de la pluralité de pages web est existante, ou
où la limite temporelle est atteinte quand le cache web externe adresse un signal au cache web local, notifiant qu'une mise à jour d'au moins une page de la pluralité de pages web est existante ;
le cache web externe étant connecté au cache web local et abonné à une unité de notification de mise à jour de site.
